# EUROPEAN PATENT APPLICATION

(11) **EP 1 367 774 A2**
(43) Date of publication of application: **03.12.2003**
(21) Application number: 03001624.0
(22) Date of filing: 24.01.2003
(51) Int. Cl.: H04L 12/28, H04L 12/64, H04H 1/00, H04Q 11/04, H04N 7/173, H04N 7/10

(54) **Integrated home network system for providing multimedia services and integrated terminal device for the integrated home network system**

(30) Priority: 31.05.2002 KR 2002030733
(71) Applicant: SAMSUNG ELECTRONICS CO., LTD., Suwon-City, Kyungki-do (KR)
(72) Inventor: Park, Jong-Ho, Suwon-shi, Kyonggi-do (KR); Chun, Kyong-Joon, Sangpa-gu, Seoul (KR); Kim, Nak-Koo, Pundang-gu, Songnam-shi, Kyonggi-di (KR)
(74) Representative: Grünecker, Kinkeldey, Stockmair & Schwanhäusser Anwaltssozietät

(57) **Abstract**

An integrated home network system for providing multimedia services enables each subscriber to view a high definition television (HDTV) broadcast and to use high-speed Internet by connecting one external line to only one terminal device (200) and to provide an integrated terminal device (200) for the integrated home network system. The integrated home network system comprises: a service providing system (100) for providing an HDTV broadcast; a plurality of integrated terminal devices (200) corresponding to the respective subscribers of the network, the integrated terminal devices (200) providing Internet access to the respective subscribers through subscriber lines (120), receiving the HDTV broadcast through the subscriber lines (120), and providing such HDTV broadcast to an HDTV (212) for each subscriber; and an access network (102) connected between the service providing system (100) and the integrated terminal devices (200), the access network (102) providing a communication path between the service providing system (100) and the integrated terminal devices (200) so that the subscribers can receive the HDTV broadcast through the subscriber lines (120), and can have access to the Internet (106).

## Description

The present invention relates to an integrated home network, and more particularly to an integrated home network system for providing multimedia services to a subscriber and a terminal device for the integrated home network system.

Generally, various devices such as information devices *(e.g.,* personal computer (PC)), communication devices *(e.g.,* telephone), broadcasting devices *(e.g.,* television set), audio and video (AV) devices *(e.g.,* digital video disc (DVD) player and digital camera), home appliances, etc. are used at home. Home networking, a technique to connect these devices with one another to form a network and to have this network interact with various external networks so as to enable a user to conveniently use it, has been suggested in various forms, but it is expected that the respective home network forms will be slowly introduced by their necessities.

As examples of receiving high definition television (HDTV) broadcast at home, a method using ground wave, a method using cable television (CATV), a method using satellite broadcast, etc., may be included. To view HDTV broadcast by means of these methods, a separate set-top box (STB) is required. In the case of the method using ground wave, the blanket area is wider than in the case of analog broadcast. The method using CATV or satellite broadcast involves high cost, and in particular, in the case of the method using satellite broadcast, environment acts as an important factor. On the other hand, in order to use the Internet, a particular modem such as an asymmetric digital subscriber line (ADSL) modulator-demodulator (modem), a cable modem, a modem for public switched telephone network (PSTN), *etc.* must be additionally installed. Thus, a user must install various apparatuses to view HDTV broadcast at home and to use the Internet. Likewise, other multimedia services such as high definition television video on demand (HDTV VOD) services have the same problems as described above. In addition, in order to control home appliances, a separate home automatic system must be installed as well.

To connect various devices used in a home to a satellite broadcast receiving antenna, a cable television (CATV) network, a public switched telephone network (PSTN), an asymmetric digital subscriber line (ADSL), *etc.,* various kinds of lines are introduced into the home. In addition, to link these lines to various devices, a number of taps are necessary. Furthermore, to connect the devices with one another, a complex wiring system of lines is necessary. For these reasons, network management is difficult, enormous maintenance cost is incurred, and new service cannot be easily accommodated.

Therefore, it is the object of the present invention to provide an integrated home network system for providing multimedia services which enables each subscriber to use various multimedia services by connecting one external line to only one terminal device, and to provide an integrated terminal device for the integrated home network system.

This object is solved by the invention as claimed in the independent claims.

Preferred embodiments are defined in the dependent claims.

It is an advantage of the present invention to provide an integrated home network system for providing multimedia services which enables each subscriber to view high definition television (HDTV) broadcast and to use high-speed Internet by connecting one external line to only one terminal device, and to provide an integrated terminal device for the integrated home network system.

It is another advantage of the present invention to provide an integrated home network system for providing multimedia services which enables each subscriber to either view a high definition television (HDTV) broadcast or use a video on demand (VOD) service, and to use high-speed Internet by connecting one external line to only one terminal device, and to provide an integrated terminal device for the integrated home network system.

It is yet another advantage of the present invention to provide an integrated home network system for providing multimedia services which enables each subscriber to either view a high definition television (HDTV) broadcast or use a video on demand (VOD) service, to use high-speed Internet, and to remotely control home appliances by connecting one external line to only one terminal device, and to provide an integrated terminal device for the integrated home network system.

In accordance with the present invention, the above object and advantages can be accomplished by the provision of an integrated home network system for providing multimedia services, comprising: a service providing system for providing a high definition television (HDTV) broadcast, a video on demand (VOD) service and an Internet access service to subscribers of the home network; a plurality of integrated terminal devices corresponding to the respective subscribers of the network, the integrated terminal devices providing Internet access to the respective subscribers through subscriber lines, receiving HDTV broadcast or VOD contents through the subscriber lines, and providing the HDTV broadcast or VOD contents to an HDTV for each subscriber; and an access network connected between the service providing system and the integrated terminal devices, the access network providing a communication path between the service providing system and the integrated terminal devices so that the subscribers can receive the HDTV broadcast or VOD contents through the subscriber lines and have access to the Internet.

Preferably, the service providing system may include: a video on demand (VOD) server for storing the VOD contents and outputting a moving picture expert group transport stream (MPEG TS) of the VOD contents in response to a VOD service request from each of the integrated terminal devices; a high definition television (HDTV) broadcast encoding device for receiving an HDTV broadcast signal, and converting the HDTV broadcast signal into the MPEG TS; and a remote access server (RAS) for connecting a corresponding integrated terminal device to the Internet in response to the VOD service request from the corresponding integrated terminal device.

In accordance with one aspect of the present invention, the above object and advantages can be accomplished by the provision of an integrated terminal device for an integrated home network system for providing multimedia services, the integrated home network system including a service providing system for providing a high definition television (HDTV) broadcast, video on demand (VOD) service and Internet access service to subscribers of the home network and a plurality of integrated terminal devices corresponding to the respective subscribers of the network, the integrated terminal devices being connected to a very-high-data-rate digital subscriber line (VDSL), the integrated terminal device comprising: at least one interface section selected from an Ethernet interface section connected to a personal computer (PC) through an Ethernet, a home phone line networking alliance (HPNA) interface section connected to a device having another HPNA interface section through a subscriber' s telephone line, and a wireless local area network (WLAN) interface section connected by wireless to a device having another WLAN interface section; a VDSL interface section for demodulating a VDSL frame received through the VDSL, converting the demodulated VDSL frame into an asynchronous transfer mode (ATM) cell, modulating the ATM cell, to be transmitted to the VDSL, into the VDSL frame and transmitting the modulated VDSL frame to the VDSL; a moving picture expert group transport stream (MPEG TS) section for converting the ATM cell associated with a moving picture expert group transport stream (MPEG TS) of HDTV broadcast or VOD contents received through the VDSL interface section into the MPEG TS; an MPEG-2 decoder for decoding audio and video data from the MPEG TS; an HDTV encoder connected to an HDTV, the HDTV encoder encoding the audio and video data decoded by the MPEG-2 decoder into an HDTV signal and transmitting the HDTV signal to the HDTV; a microprocessor unit for converting an internet protocol (IP) packet, to be transmitted from each Ethernet interface section, the HPNA interface section and the WLAN interface section to the Internet, into the ATM cell to transmit the ATM cell to the VDSL interface section, converting the ATM cell received from the VDSL interface section into the Internet protocol packet to transmit the Internet protocol packet to one of the Ethernet interface section, the home phone line networking alliance (HPNA) interface section and the wireless local area network (WLAN) interface section, and operating the moving picture expert group transport stream (MPEG TS) section in response to the ATM cell; and a memory for storing operation programs and data of the microprocessor unit.

Preferably, the integrated terminal device may comprise: a remote controller for generating an infrared signal of an high definition television (HDTV) control command to control the HDTV; and an infrared receiver for receiving the infrared signal from the remote controller and outputting the HDTV control command; the microprocessor unit controlling the moving picture expert group (MPEG) decoder in response to the HDTV control command received from the infrared receiver.

The integrated terminal device may further comprise: a power line communication (PLC) controller connected to a home appliance having the PLC controller through a subscriber home power line; and a remote controller for generating an infrared signal of a home appliance control command to control the home appliance; the microprocessor unit converting the Internet protocol packet, to be transmitted from the PLC controller to the Internet, into the ATM cell to transmit the asynchronous transfer mode (ATM) cell to the very-high-data-rate digital subscriber line (VDSL) interface section, converting the ATM cell received from the VDSL interface section into the Internet protocol packet to transmit the Internet protocol packet to the PLC controller of the home appliance, and transmitting the home appliance control command received from an infrared receiver to the home appliance through the PLC controller.

The integrated terminal device may further comprise: a remote controller for generating an infrared signal of an Internet access control command to control the Internet; and an infrared receiver for receiving the infrared signal from the remote controller and outputting the Internet access control command; the microprocessor unit having a Web browser, driving the Web browser in response to the Internet access control command received from the infrared receiver, converting the internet protocol (IP) packet, to be transmitted to the Internet, into the asynchronous transfer mode (ATM) cell to transmit the ATM cell to the very-high-data-rate digital subscriber line (VDSL) interface section, and graphically decoding data included in the ATM cell received from the VDSL interface section using the MPEG-2 decoder to transmit the decoded data to the high definition television (HDTV) encoder.

The integrated terminal device may further comprise an Institute of Electrical and Electronics Engineers (IEEE) standard 1394 interface section for converting the moving picture expert group transport stream (MPEG TS) into an IEEE standard 1394 format, and transmitting the MPEG TS having the IEEE standard 1394 format to an IEEE standard 1394 cable. A simplified integrated device may be connected to the IEEE standard 1394 cable.

The simplified integrated device may include: an IEEE standard 1394 interface section connected to the IEEE standard 1394 cable and providing an IEEE standard 1394 interface; an MPEG-2 decoder for decoding audio and video data from a moving picture expert group transport stream (MPEG TS) received from the IEEE standard 1394 interface section; a high definition television (HDTV) encoder connected to an HDTV, the HDTV encoder encoding the audio and video data decoded by the MPEG-2 decoder into an HDTV signal to transmit the HDTV signal to the HDTV; a microprocessor unit for controlling the MPEG-2 decoder in response to the moving picture expert group transport stream (MPEG TS) from the IEEE standard 1394 interface section; and a memory for storing operation programs and data of the microprocessor unit.

A more complete appreciation of the invention, and many of the attendant advantages thereof, will be readily apparent as the same becomes better understood by reference to the following detailed description when considered in conjunction with the accompanying drawings, in which like reference numerals indicate the same or similar components, and wherein:
Fig. 1 is a block diagram showing the construction of an integrated home network system for providing multimedia services according to the preferred embodiment of the present invention;
Fig. 2 is a block diagram showing the construction of the integrated terminal device shown in Fig. 1;
Fig. 3 is a block diagram showing the construction of a simplified integrated device according to the preferred embodiment of the present invention;
Fig. 4 is a diagram showing a protocol stack of an integrated home network system for providing multimedia services according to the preferred embodiment of the present invention; and
Fig. 5 is a diagram showing a task flow of a microprocessor unit shown in Fig. 2 according to the preferred embodiment of the present invention.

Hereinafter, the preferred embodiments of the present invention will be explained in more detail with reference to the accompanying drawings. In the following description, well known functions or constructions are not described in detail since they would obscure the invention in unnecessary detail.

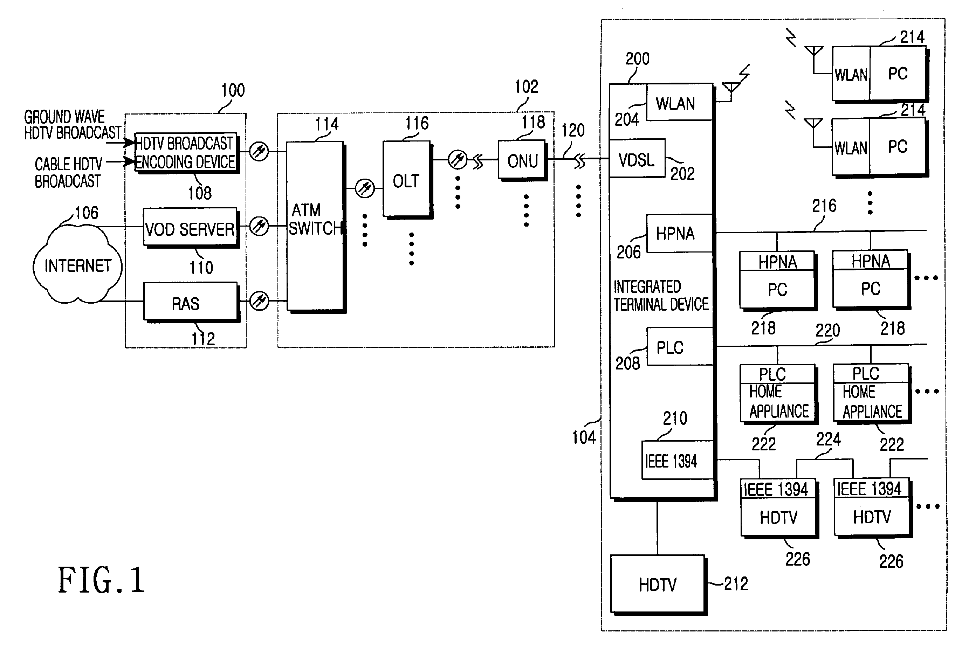

Fig. 1 is a block diagram showing the construction of an integrated home network system for providing multimedia services according to the preferred embodiment of the present invention. Referring to Fig. 1, an integrated home network system for providing multimedia services according to the present invention comprises a service providing system 100, an access network 102, and a plurality of integrated terminal devices 200 installed in each subscriber' s home 104. Indeed, a number of home network subscribers may connect to the service providing system 100 through the access network 102, but for the sake of convenience, one subscriber' s home 104 and one integrated terminal device 200 installed in the subscriber's home 104 are shown in Fig. 1.

The service providing system 100 includes a high definition television (HDTV) broadcast encoding device 108, a video on demand (VOD) server 110 and a remote access server (RAS) 112. The service providing system 100 provides an HDTV broadcast, a VOD service and an Internet access service to the home network subscribers. The HDTV broadcast encoding device 108 receives a ground wave HDTV broadcast signal or a cable HTDV broadcast signal, converts the received signal into a moving picture expert group transport stream (MPEG TS), and outputs the MPEG TS. The VOD server 110 stores HDTV VOD contents, and outputs an MPEG TS of the VOD contents in response to a VOD service request from the integrated terminal device 200. The RAS 112 is commonly called a remote access server. The RAS 112 provides Internet protocol address assignation and certification services for connecting a corresponding integrated terminal device in response to an Internet access request from the integrated terminal device 200.

The integrated terminal device 200 installed in the subscriber's home 104 corresponds to the respective home network subscribers. The integrated terminal device 200 is connected to the access network 102 through a very-high-data-rate digital subscriber line (VDSL) 120, and is connected to the service providing system 100 through the access network 102 so that Internet access is provided to each subscriber through the VDSL, and high definition television (HDTV) broadcast or video on demand (VOD) contents received through the VDSL 120 are provided to an HDTV 212 installed in the subscriber's home 104. The integrated terminal device 200 includes a wireless local area network (WLAN) interface section 204, a home phone line networking alliance (HPNA) interface section 206, a power line communication (PLC) controller section 208 and an IEEE standard 1394 interface section 210. The integrated terminal device 200 is connected to a plurality of devices 214, including the respective WLAN interface sections, via a WLAN. The integrated terminal device 200 is connected to a plurality of devices 216, including the respective HPNA interface sections, via a telephone line 216 in the subscriber's home 104. The integrated terminal device 200 is connected to a plurality of home appliances 222, including the respective PLC controllers, via a power line 220 in the subscriber's home 104. As shown in Fig. 1, the integrated terminal device 200 is connected to a plurality of HDTVs 226 having a simplified integrated device, which includes an IEEE standard 1394 interface section. In Fig. 1, the WLAN interface section 204, HPNA interface section 206, PLC controller 208 and IEEE 1394 interface section 210 are simplified as WLAN, HPNA, PLC and IEEE 1394, respectively. A personal computer is exemplified as the devices 214 and 216 including the respective WLAN interface section and HPNA interface section. As home appliances 222, there may be included, for example, gas sensors for detecting gas leakage, gas valves for block gas supply, *etc.,* in the subscriber's home 104.

The access network 102 is arranged between the service providing system 100 and the integrated terminal device 200. The access network 102 is connected to the service providing system 100 through an optical line, and is connected to the integrated terminal device 200 through the very-high-data-rate digital subscriber line (VDSL) 120. The access network 102 provides a communication path between the service providing system 100 and the integrated terminal device 200 so that the subscribers can receive the high definition television (HDTV) broadcast and video on demand (VOD) contents through the VDSL 120 and have access to the Internet. The access network 102, an example of use of an asynchronous transfer mode-passive optical network (ATM-PON), includes an asynchronous transfer mode (ATM) switch 114, a plurality of optical line terminals (OLTs) 116 as optical subscriber units, and a plurality of optical network units (ONUs) 118. The optical network units 118 are connected to the optical line terminals 116 through the respective optical lines, and are connected to the integrated terminal device 200 through the VDSL 120 to provide an interface between the optical line and the VDSL 120. The optical line terminals 116 are connected to the ATM switch 114 and the optical network units 118, respectively, by the respective optical lines. The optical line terminals 116 multiplex upstream signals to be transmitted from the integrated terminal device 200 to the service providing system 100 through the optical network units 118, and demultiplex downstream signals to be transmitted from the service providing system 100 to the integrated terminal device 200 through the optical network units 118. The ATM switch 114 is connected to the HDTV broadcast encoding device 108, the VOD server 110, the remote access server (RAS) 112, and the optical line terminal 116 through the optical lines, transmits the MPEG TS of the HDTV broadcasts and VOD contents to the integrated terminal device 200 through the optical line terminal 116, and provides communication between the corresponding integrated terminal device 200 and the RAS 112 in response to the Internet access of the corresponding integrated terminal device 200.

When the subscriber's home 104 is a private home, the optical network units (ONUs) 118 are apart from the subscriber's home 104. When the subscriber's home 104 is a hospital, hotel, company, television station, etc., the optical network units 118 are located within the subscriber's home 104. The distance between the optical line terminals (OLTs) 116 and the optical network units 118, for example, can be some kilometers long via a 2.5Gbps optical line. The distance between the optical network units 118 and the integrated terminal device 200, for example, can be 300m apart through the VDSL 120 having a data rate of 36Mbps downstream and 3.6Mbps upstream.

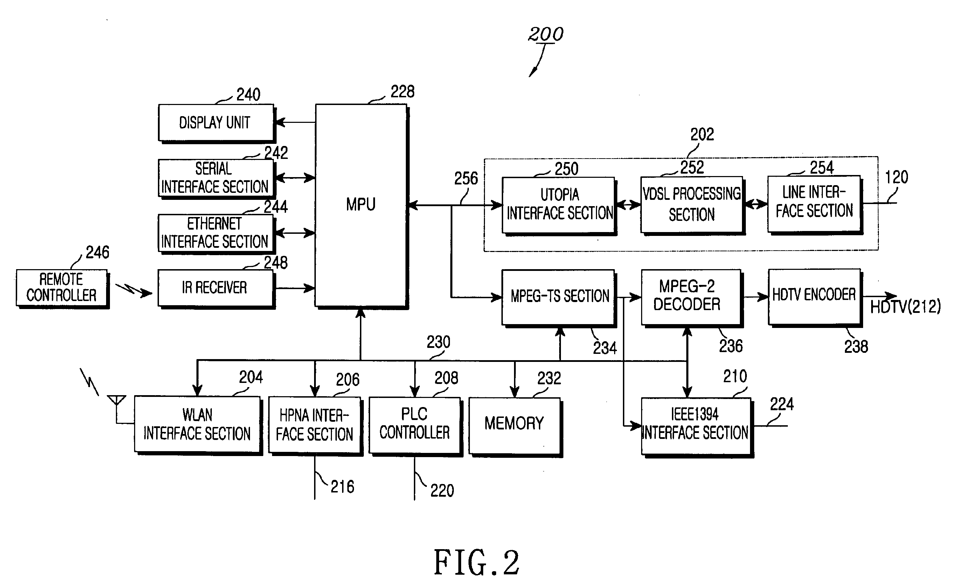

Fig. 2 is a block diagram showing the construction of the integrated terminal device 200. Referring to Fig. 2, the very-high-data-rate digital subscriber line (VDSL) 120 is connected to a VDSL interface section 202 including a universal test & operations PHY interface for ATM (UTOPIA) interface section 250, a VDSL processing section 252 and a line interface section 254. The VDSL interface section 202 demodulates a VDSL frame received through the VDSL 120, converts the modulated VDSL frame into an asynchronous transfer mode (ATM) cell, and outputs the ATM cell to a UTOPIA bus 256 connected to a microprocessor unit 228 and a moving picture expert group-transport stream (MPEG TS) section 234. Since the ATM cell simultaneously transmitted to the microprocessor unit 228 and the MPEG-TS section 234 can extract different data by virtual path identifier (VPI) value and virtual channel identifier (VCI) value, respectively, the ATM cell associated with Internet protocol can be processed in the microprocessor unit 228 and the ATM cell associated with HDTV broadcast or VOD contents can be processed, under the control of the microprocessor unit 228, in the MPEG-TS section 234. At this time, the ATM cell inputted to the microprocessor unit 228 is converted into an Internet protocol packet within the microprocessor unit 228, and the Internet protocol packet is transmitted to a corresponding device among devices connected to an Ethernet interface section 244, a WLAN interface section 204, a home phone line networking alliance (HPNA) interface section 206, a PLC controller 208, and an IEEE standard 1394 interface section 210. The VDSL interface section 202 also modulates the ATM cell to be transmitted to the VDSL 120 into a VDSL frame and transmits the VDSL frame to the VDSL 120. Accordingly, user data inputted to the microprocessor unit 228 are converted into an ATM cell and transmitted to the UTOPIA interface section 250 of the VDSL interface section 202. The transmitted ATM cell is processed into a VDSL frame in the VDSL processing section 252, subjected to quadrature-amplitude modulation (QAM), and transmitted to the VDSL 120 via analog front-ending through the line interface (AFE) section 254.

The moving picture expert group transport stream (MPEG TS) section 234 connected to the universal test & operations PHY interface for ATM (UTOPIA) bus 256 converts the asynchronous transfer mode (ATM) cell associated with the MPEG TS according to high definition television (HDTV) broadcast or video on demand (VOD) contents received through the very-high-data-rate digital subscriber line (VDSL) interface section 202 into an MPEG TS, and outputs the MPEG TS to an MPEG-2 decoder 236. The MPEG-2 decoder 236 searches for a channel or video identifier (ID) and audio identifier (which correspond to VOD contents) selected by the subscriber using a remote controller 246 by inputting the MPEG TS, decodes video data and audio data from the MPEG TS, and outputs the decoded video data and audio data to an HDTV encoder 238. The HDTV encoder 238 connected to the HDTV 212 encodes the audio data and video data decoded by the MPEG-2 decoder 236 into an HDTV signal, and transmits the HDTV signal to the HDTV 212. Accordingly, the subscriber can view HDTV broadcast or VOD contents received from the service providing system 100 through the access network 102 and the VDSL 120.

The microprocessor unit 228 is connected to a display unit 240, a serial interface section 242, the Ethernet interface section 244 and an infrared receiver 248, in addition to the universal test & operations PHY interface for ATM (UTOPIA) bus 256. The microprocessor unit 228 is also connected to the wireless local area network (WLAN) interface section 204, the home phone line networking alliance (HPNA) interface section 206, the power line communication (PLC) controller 208, a memory 232 and the IEEE standard 1394 interface section 210 through a system bus 230, and is also connected to the moving picture expert group transport stream (MPEG TS) section 234 and the MPEG-2 decoder 236. The memory 232 stores operation programs and data of the microprocessor unit 228. The microprocessor unit 228 is a microprocessor unit having a PHY/MAC (physical layer device/media access control), and the Ethernet interface section 244 is connected to a PHY/MAC port of the microprocessor unit 228. The microprocessor unit 228 converts an Internet protocol packet, for transmission from each of the Ethernet interface section 244, the WLAN interface section 204, the HPNA interface section 206, the PLC controller 208 and the IEEE standard 1394 interface section 210 to the Internet 106, into an ATM cell so as to transmit the ATM cell to the very-high-data-rate digital subscriber line (VDSL) interface section 202, and converts the ATM cell associated with the Internet protocol received through the VDSL interface section 202 into an Internet protocol packet for transmission to one of the Ethernet interface section 244, the WLAN interface section 204, the HPNA interface section 206, the PLC controller 208 and the IEEE standard 1394 interface section 210. Accordingly, a personal computer (PC) connected to the Ethernet interface section 244, the PCs 214 including WLAN interface section 204, the PCs 216 including HPNA interface section 206, or a personal computer connected to the IEEE standard 1394 cable 224 can have access to the Internet 106. The subscriber connects to the VOD server 110 through the Internet 106 and requests VOD service to receive VOD contents through the access network 102 and the VDSL 120. In the WLAN interface section 204, Internet protocol data transmitted by the microprocessor unit 228 are modulated so as to conform to an 802.11B form, and the modulated data are transmitted to the subscriber's home 104 through the WLAN. The HPNA interface section 206 encapsulates the Internet protocol data transmitted by the microprocessor unit 228, converts the encapsulated data into a phone line networking alliance (PNA) form, and transmits the form to the subscriber's home 104 through the telephone line 216. In addition, the home appliances 222 can be remotely controlled via the Internet 106. At this time, the power line communication (PLC) controller 208 modulates the Internet protocol data transmitted by the microprocessor unit 228 so as to conform to the Lonworks standard, and transmits the modulated data to the power line to control the home appliances 222.

The microprocessor unit 228 operates the moving picture expert group transport stream (MPEG TS) section 234 in response to the asynchronous transfer mode (ATM) cell associated with the MPEG TS according to high definition television (HDTV) broadcast or video on demand (VOD) contents through the VDSL interface section 202. In addition, since the microprocessor unit 228 is connected to the display unit 240, such as a light emitting diode (LED) or liquid crystal display (LCD), the microprocessor unit 228 can display the current state of the integrated terminal device 200. Furthermore, since the microprocessor unit 228 is connected to the serial interface section 242, such as an RS-232C or a universal serial bus (USB), the subscriber can monitor and change the current state of the integrated terminal device 200 through the serial interface section 242.

On the other hand, the remote controller 246 is used when the subscriber wants to control the high definition television (HDTV) 212 or the home appliances 222, and to have access to the Internet 106 without using personal computer while watching the HDTV 212. The remote controller 246 includes buttons to input HDTV control commands for controlling the HDTV 212, home appliance control commands for controlling the home appliances 222, and Internet access control commands. The remote controller 246 generates an infrared signal corresponding to the commands in accordance with the subscriber=s operation. The HDTV control commands include commands to select channels of the HDTV 212, commands to control volume, *etc.,* while the home appliance control commands include commands to open or close gas valve, *etc.,* and the Internet access commands include commands to drive the web browser mounted on the microprocessor unit 228. The microprocessor unit 228 receives these control commands from the infrared receiver 248, controls the moving picture expert group (MPEG) decoder 236 to select channels and to control volume, and transmits the home appliance control commands to corresponding home appliances through the power line communication (PLC) controller 208. The microprocessor unit 228 drives the web browser in response to the Internet access control commands, converts an Internet protocol packet to be transmitted to the Internet 106 into an asynchronous transfer mode (ATM) cell, transmits the converted ATM cell through the very-high-data-rate digital subscriber line (VDSL) interface section 202, and graphically decodes the data according to the ATM cell associated with Internet protocol using the MPEG-2 decoder 236 so as to transmit the decoded data to the HDTV encoder 238. Accordingly, the subscriber can have access to the Internet 106 while watching the HDTV 212.

The IEEE standard 1394 interface section 210 converts the moving picture expert group transport stream (MPEG TS) converted by the MPEG-TS section 234 into an IEEE standard 1394 format, and outputs it to the IEEE standard 1394 cable 224. A plurality of high definition televisions (HDTVs) 226 connected to the IEEE standard 1394 cable 224 include a simplified integrated device so by means of which the subscriber can view HDTV broadcast. The simplified integrated device is a device by means of which the subscriber can view HDTV broadcast with high definition by decoding the MPEG TS outputted from the MPEG-TS section 234.

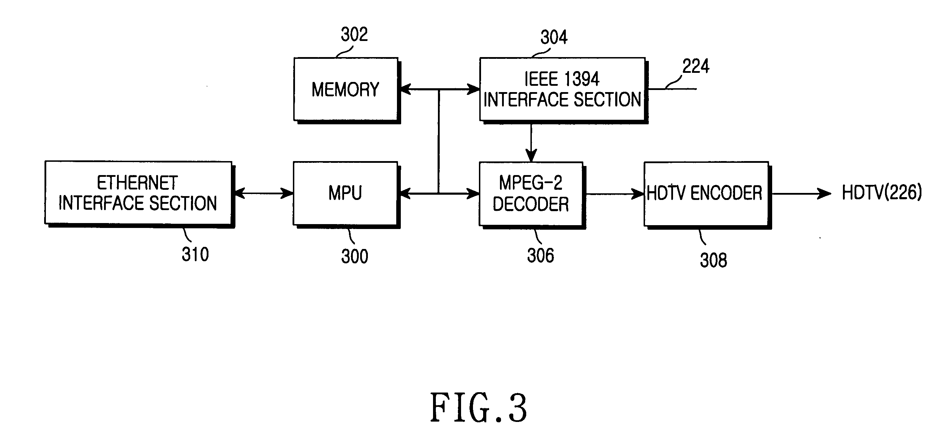

As shown in Fig. 3, the simplified integrated device includes a microprocessor unit 300, a memory 302, an IEEE standard 1394 interface section 304, an MPEG-2 decoder 306, a high definition television (HDTV) encoder 308 and an Ethernet interface section 310. The IEEE standard 1394 interface section 304 is connected to the IEEE standard 1394 cable 224 so as to provide an IEEE standard 1394 interface. The MPEG-2 decoder 306 decodes audio data and video data from a moving picture expert group transport stream (MPEG TS) received from the IEEE standard 1394 interface section 304, and outputs the decoded data to the HDTV encoder 308. The HDTV encoder 308 is connected to the HDTV 226, and encodes audio data and video data decoded by the MPEG_2 decoder 306 to form an HDTV signal for transmission to the HDTV 226. The microprocessor unit 228 controls the MPEG-TS decoder 306 in response to the receipt of the MPEG TS through IEEE standard 1394 interface section 304. The memory 302 stores operation programs and data of the microprocessor unit 300. Accordingly, the subscriber can view an HDTV broadcast or video on demand (VOD) contents through other HDTVs 226 connected to the IEEE standard 1394 cable 224, as well as through the HDTV 212 connected directly to the integrated terminal device 212. Since the simplified integrated device includes the Ethernet interface section 310 connected to the microprocessor unit 300, a personal computer can be connected to the Ethernet interface section 310.

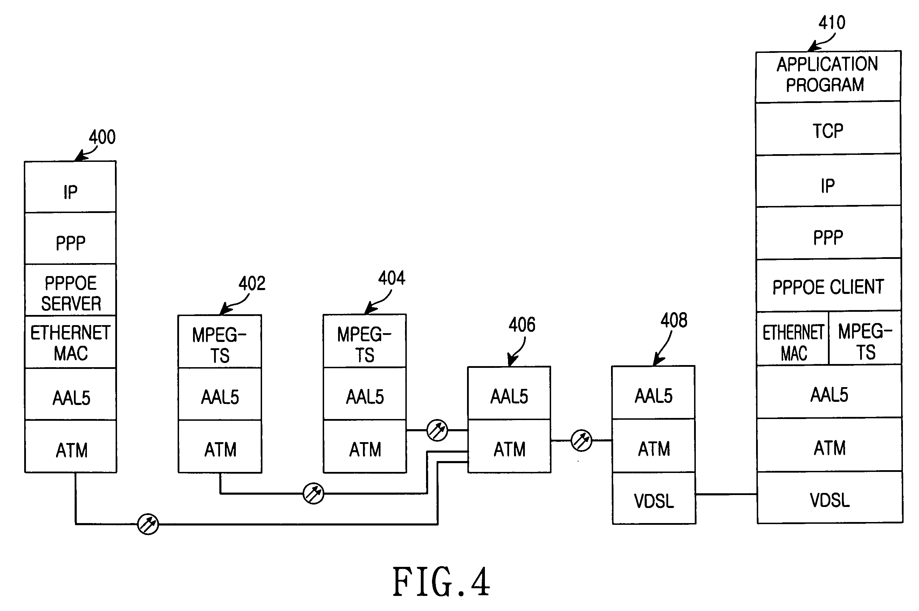

Fig. 4 is a diagram showing a protocol stack of the integrated home network system for providing multimedia services according to the preferred embodiment of the present invention. Referring to Fig. 4, the protocol stack receives and transmits data between the service providing system 100 and the integrated terminal device 200. Reference numeral 400 represents the protocol stack of the remote access server (RAS) 112, reference numeral 402 represents the protocol stack of the high definition television (HDTV) broadcast encoding device 108, reference numeral 404 represents the protocol stack of the video on demand (VOD) server 110, reference numeral 406 represents the protocol stack of the asynchronous transfer mode (ATM) switch 114, reference numeral 408 represents the protocol stack of the optical network unit (ONU) 118, and reference numeral 410 represents the protocol stack of the integrated terminal device 200.

A very-high-data-rate digital subscriber line (VDSL) stack and an asynchronous transfer mode (ATM) stack are processed in the VDSL interface section 202 of the integrated terminal device 200, while an ATM adaptation layer (AAL) 5 stack, an Ethernet MAC stack, a point-to-point protocol over Ethernet (PPPoE) client stack, a point-to-point protocol (PPP) stack, an Internet protocol stack, a transmission control protocol (TCP) stack and an application program stack are processed in the microprocessor unit 228 of the integrated terminal device 200. The optical network unit (ONU) 118 interlocks with the integrated terminal device 200 to process the VDSL stack and the ATM stack, and connects to the RAS 112 with the ATM. A PPPoE is connected to the integrated terminal device 200 in the remote access server (RAS) 112. At this time, the RAS 112 is end-to-end connected by a PPPoE server, and all signals generated in the integrated terminal device 200, (*e.g.*, a signal generated by click of the browser to connect to the Internet) are operated on the PPPoE. The moving picture expert group transport stream (MPEG TS) is practically processed in an ATM layer. Accordingly, the MPEG TS corresponding to HDTV broadcast or VOD contents enters the ATM layer of the integrated terminal device 200 to transmit the MPEG TS to the MPEG-2 decoder 236. At this time, the microprocessor unit 228 is not involved with the moving picture expert group (MPEG) data. When an Internet browser is clicked in the personal computer connected to the integrated terminal device 200, the signal is converted into an Internet protocol packet on the PPPoE and transmitted to the RAS 112. At this time, the RAS 112 transmits the Internet protocol packet to a desired location.

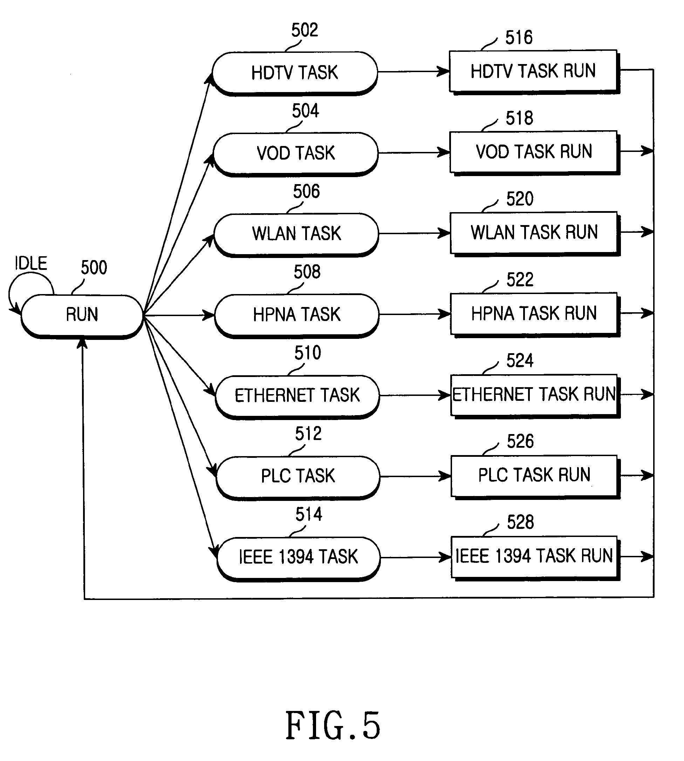

Fig. 5 is a diagram showing a task flow in the microprocessor unit 228 shown in Fig. 2 according to the preferred embodiment of the present invention. Referring to Fig. 5, the microprocessor unit 228 is in the idle state when no event is generated in a run-state 500. The microprocessor unit 228 carries out tasks in response to commands received through the infrared receiver 248 from one or more of a high definition television (HDTV) task 502, a video on demand (VOD) task 504, a wireless local area network (WLAN) task 506, an wireless local area network (WLAN) task 508, an Ethernet task 510, a power line communication (PLC) task 512 and an IEEE standard 1394 task 514, or events generated from the personal computer connected to the Ethernet interface section 244, PCs 214 connected to the WLAN, personal computers 216 connected to the telephone line 216 by the home phone line networking alliance (HPNA), personal computers connected to the IEEE standard 1394 cable 224, and home appliances 222 connected to the power line 220. Accordingly, a corresponding task run among steps 516 to 528 is performed. After the task is completed, the microprocessor unit 228 again returns to the idle state to wait for the next event. The WLAN task 506, HPNA task 508, Ethernet task 510, PLC task 512, and IEEE standard 1394 task 514 can call one another and communicate data to a WLAN interface section 204, a phone line networking alliance (PNA) interface section 206, a PLC controller 208, an IEEE standard 1394 interface section 210 and an Ethernet interface section 244.

In the integrated home network system of the present invention, when the subscriber wants to view a high definition television (HDTV) broadcast through the HDTV 212, channels can be selected or volume can be controlled using the remote controller 246. When the subscriber wants to receive HDTV video on demand (VOD) contents, he connects to the VOD server 110 through the Internet 106 using the personal computer connected to the Ethernet interface section 244 of the integrated terminal device 200, a personal computer connected to the WLAN, or the personal computer connected to the home phone line networking alliance (HPNA), *etc.,* and requests desired VOD contents. Then, the VOD server 110 outputs the moving picture expert group transport stream (MPEG TS) corresponding to the requested VOD contents. The MPEG TS corresponding to HDTV broadcast or VOD contents is received from the very-high-data-rate digital subscriber line (VDSL) interface section 202 via the access network 102 and the VDSL 120. The ATM cell associated with the MPEG TS corresponding to the HDTV broadcast or VOD contents outputted from the VDSL interface section 202 is converted into an MPEG TS in the MPEG-TS section 234, and the MPEG TS is outputted to the MPEG-2 decoder 236. The MPEG-2 decoder 236 searches for a channel or video identifier and an audio identifier (which corresponds to the VOD contents) selected by the subscriber using the remote controller 246, decodes video data and audio data from the MPEG TS, and outputs the decoded video data and audio data to the HDTV encoder 238, which transmits the HDTV signal to the HDTV 212. Accordingly, the subscriber can view an HDTV broadcast or VOD contents received through the VDSL 120 via the access network 102 from the service providing system 100.

In order to have access to the Internet 106 using a personal computer connected to the Ethernet interface section 244 of the integrated terminal device 200, the personal computer connected to the wireless local area network (WLAN), the personal computer connected to the home phone line networking alliance (HPNA), *etc.,* an Internet protocol packet is selected from an IPOA, a bridge mode, *etc.,* of the point-to-point protocol over Ethernet (PPPoE). The Internet protocol packet is converted into an asynchronous transfer mode (ATM) cell. The ATM cell is inputted to the remote access server (RAS) 112 via the interface section 202, the very-high-data-rate digital subscriber line (VDSL) 120 and the access network 102 so as to complete an ATM. The ATM cell is again converted into the Internet protocol packet so as to connect to the Internet 106.

When high definition television (HDTV) broadcast viewing and Internet access are simultaneously performed, the Intemet protocol packet is selected from various modes of the point-to-point protocol over Ethernet (PPPoE) and is converted to an asynchronous transfer mode (ATM) cell. Since the virtual path identifier (VPI) value and virtual channel identifier (VCI) value used herein are different from those used in the HDTV broadcast, no collision occurs.

Hereinafter, examples of controlling home appliances 222 are described. Once a gas sensor connected to the power line communication (PLC) controller detects gas leakage, the gas detector transmits the detection signal to the power line 220 through the PLC controller 208. The microprocessor unit 228 of the integrated terminal device 200 receives the signal, converts the signal into a transmission control protocol/Internet protocol (TCP/IP) packet, and connects to the Internet 106 through the very-high-data-rate digital subscriber line (VDSL) 120 so as to inform a wireless application protocol (WAP) server. Then, the WAP server informs the subscriber of the gas leakage through a cell phone as a short message service (SMS) message. Usually, the subscriber may connect to the PLC server driven by the WAP server to check the state of gas valve. If the gas valve is opened, the subscriber can close the gas valve through the WAP server. Specifically, a command to close the gas valve is transmitted from the WAP server to the integrated terminal device 200 using a TCP/IP packet. Then, a corresponding command is transmitted by the PLC controller 208 of the microprocessor unit 228 through the power line 220.

In accordance with the present invention, multimedia services, Internet access, home appliance control, *etc.,* are provided by one integrated terminal device 200 using the remote controller 246. Therefore, networking over the whole country will enable the subscriber to view a high definition television (HDTV) broadcast at a hospital, hotel, company, television station, as well as at home. In addition, the blanket area can be reduced, the subscriber can enjoy the quality of cultural life at low cost, and the subscriber can use multimedia services such as an HD video on demand (VOD) service. Since only one very-high-data-rate digital subscriber line (VDSL) 120 cable is introduced into the subscriber's home 104, the installation is convenient, the cost is reduced, and viewing fees of HDTV broadcast, VOD service fees, Internet access fees, etc., can be collectively processed. In accordance with the present invention, networking the subscriber's home 104 with one integrated terminal device 200 can provide the subscriber's home 104 with various services.

The present invention has been described in connection with what is presently considered the most practical and the preferred embodiment. However, various modifications may apply. In particular, the very-high-data-rate digital subscriber line (VDSL) is mentioned as a subscriber line in the embodiment of the present invention. However, if desired, other lines, (*e.g.*, an optical line) can be used instead of the VDSL. If the optical line is used, an optical interface section (instead of the VDSL interface section 202) is used in the integrated terminal device 200 to directly connect to the optical line of the optical line terminal (OLT) 116. In addition, an example for providing an HDTV broadcast, Internet access, video on demand (VOD) service and home appliance control is mentioned in the embodiment of the present invention. However, if desired, they can be selectively used in accordance with the practical application thereof. Furthermore, the integrated terminal device including the Ethernet interface section, home phone line networking alliance (HPNA) interface section, wireless local area network (WLAN) interface section and IEEE standard 1394 interface section is described. However, if desired, these interface sections can be selectively included in the integrated terminal device. Connection with other interfaces, such as Bluetooth, home RF, osgi, UPnP, voice over Internet protocol (VoIP), *etc.,* is also possible by including corresponding interface sections in the integrated terminal device 200.

In further embodiments, the present invention also relates to methods of operating the systems and devices described above in the various embodiments.

## Claims

1. An integrated home network system for providing multimedia services, comprising:
a service providing system (100) for providing at least one of a high definition television (HDTV) broadcast, a video on demand (VOD) service and an Internet access service to subscribers of the home network;
a plurality of integrated terminal devices (200) corresponding to respective subscribers of the network, the integrated terminal devices providing an Internet access to the respective subscribers through subscriber lines, receiving at least one of HDTV broadcast contents and VOD contents through the subscriber lines, and providing said at least one of the HDTV broadcast contents and the VOD contents to an HDTV for each subscriber; and
an access network (102) connected between the service providing system and the plurality of integrated terminal devices, the access network providing a communication path between the service providing system and the plurality of integrated terminal devices so that the subscribers receive said at least one of the HDTV broadcast contents and the VOD contents through the subscriber lines and have access to the Internet.

2. The integrated home network system as set forth in claim 1, wherein the service providing system comprises:
a video on demand (VOD) server (110) for storing the VOD contents and outputting a moving picture expert group transport stream (MPEG TS) of the VOD contents in response to a VOD service request from at least one of the integrated terminal devices;
a high definition television (HDTV) broadcast encoding device (108) for receiving an HDTV broadcast signal and converting the HDTV broadcast signal into the MPEG TS; and
a remote access server (RAS,112) for connecting a corresponding one of the plurality of integrated terminal device to the Internet in response to the VOD service request from the corresponding one of the plurality of integrated terminal devices.

3. The integrated home network system as set forth in claim 2, wherein the subscriber lines include a very-high-data-rate digital subscriber line (VDSL).

4. The integrated home network system as set forth in claim 3, wherein the access network comprises:
a plurality of optical network units (ONUs,118) connected to respective ones of the plurality of integrated terminal devices through the very-high-data-rate digital subscriber line (VDSL), the ONUs providing an interface between an optical line and the VDSL;
at least one optical line terminal (OLT,116) connected to the ONUs, the OLT multiplexing upstream signals for transmission from the respective ones of the integrated terminal devices to the service providing system through the ONUs, demultiplexing downstream signals for transmission from the service providing system to the integrated terminal devices, and transmitting the demultiplexed downstream signals to the ONUs; and
an asynchronous transfer mode (ATM) switch (114) connected to the high definition television (HDTV) broadcast encoding device, the video on demand (VOD) server, the remote access server (RAS) and the OLT through an optical path, the ATM switch transmitting the moving picture expert group transport stream (MPEG TS) of the video on demand (VOD) contents to the corresponding one of the integrated terminal devices through the OLT in response to the VOD service request from the corresponding one of the integrated terminal devices, and providing communication between the corresponding one of the integrated terminal devices and the RAS in response to the Internet access of the corresponding one of the integrated terminal devices.

5. An integrated terminal device for an integrated home network system for providing multimedia services, the integrated home network system including a service providing system for providing a high definition television (HDTV) broadcast, a video on demand (VOD) service and an Internet access service to subscribers of the home network, and at least one said integrated terminal device corresponding to a respective one of the subscribers of the network, each said integrated terminal device being connected to a very-high-data-rate digital subscriber line (VDSL), and comprising:
at least one interface section comprising one of an Ethernet interface section (244) connected to a personal computer through an Ethernet, a home phone line networking alliance (HPNA) interface section (206) connected through a subscriber telephone line to a device having another HPNA interface section, and a wireless local area network (WLAN) interface section (204) connected by wireless to a device having another WLAN interface section;
a VDSL interface section (202) for demodulating a VDSL frame received through the VDSL, converting the demodulated VDSL frame into an asynchronous transfer mode (ATM) cell, modulating the ATM cell into the VDSL frame for transmission to the VDSL, and transmitting the modulated VDSL frame to the VDSL;
a moving picture expert group transport stream (MPEG TS) section (234) for converting an ATM cell associated with one of contents of an MPEG TS of an HDTV broadcast and video on demand (VOD) contents received through the VDSL interface section into the MPEG TS;
an MPEG-2 decoder (236) for decoding audio and video data from the MPEG TS;
an HDTV encoder (238) connected to an HDTV, the HDTV encoder encoding the audio and video data decoded by the MPEG-2 decoder to form an HDTV signal, and transmitting the HDTV signal to the HDTV; and
a microprocessor unit (228) for converting an Internet protocol packet, to be transmitted from each said Ethernet interface section, home phone line networking alliance (HPNA) interface section and wireless local area network (WLAN) interface section to the Internet, into the ATM cell so as to transmit the ATM cell to the VDSL interface section, converting the ATM cell received from the VDSL interface section into the Internet protocol packet so as to transmit the Internet protocol packet to one of said Ethernet interface section, said HPNA interface section and said WLAN interface section, and operating the MPEG TS section in response to the ATM cell.

6. The integrated terminal device as set forth in claim 5, further comprising:
a remote controller (246) for generating an infrared signal corresponding to a high definition television (HDTV) control command so as to control the HDTV; and
an infrared receiver (248) for receiving the infrared signal from the remote controller and outputting the HDTV control command;
the microprocessor unit controlling the moving picture expert group (MPEG) decoder in response to the HDTV control command received from the infrared receiver.

7. The integrated terminal device as set forth in claim 5 or 6, further comprising:
a power line communication (PLC) controller (208) connected to a home appliance having the PLC controller through a subscriber home power line; and
a remote controller (246) for generating an infrared signal corresponding to a home appliance control command so as to control the home appliance;
the microprocessor unit converting the Internet protocol packet, to be transmitted from the PLC controller to the Internet, into the asynchronous transfer mode (ATM) cell so as to transmit the ATM cell to the VDSL interface section, converting the ATM cell received from the very-high-data-rate digital subscriber line (VDSL) interface section into the Internet protocol packet so as to transmit the Internet protocol packet to the PLC controller of the home appliance, and transmitting the home appliance control command received from an infrared receiver to the home appliance through the PLC controller.

8. The integrated terminal device as set forth in one of claims 5 to 7, further comprising:
a remote controller (246) for generating an infrared signal corresponding to an Internet access control command so as to control the Internet; and
an infrared receiver (248) for receiving the infrared signal from the remote controller and outputting the Internet access control command;
the microprocessor unit having a Web browser, driving the Web browser in response to the Internet access control command received from the infrared receiver, converting the Internet protocol packet, to be transmitted to the Internet, into the asynchronous transfer mode (ATM) cell so as to transmit the ATM cell to the very-high-data-rate digital subscriber line (VDSL) interface section, and graphically decoding data included in the ATM cell received from the VDSL interface section using the MPEG-2 decoder so as to transmit the decoded data to the high definition television (HDTV) encoder.

9. The integrated terminal device as set forth in one of claims 5 to 8, further comprising:
an IEEE standard 1394 interface section (210) for converting the moving picture expert group transport stream (MPEG TS) into an IEEE standard 1394 format, and transmitting the MPEG TS converted into the IEEE standard 1394 format to an IEEE standard 1394 cable.

10. The integrated terminal device as set forth in claim 9, further comprising another integrated device which includes:
an additional IEEE standard 1394 interface section (304) connected to the IEEE standard 1394 cable for receiving the MPEG TS therefrom, and providing an IEEE standard 1394 interface;
an MPEG-2 decoder (306) for decoding audio and video data from the moving picture expert group transport stream (MPEG TS) received by the additional IEEE standard 1394 interface section;
an HDTV encoder (308) connected to a high definition television (HDTV), the HDTV encoder encoding the audio and video data decoded by the MPEG-2 decoder to form an HDTV signal so as to transmit the HDTV signal to the HDTV;
an additional microprocessor unit (300) for controlling the MPEG-2 decoder in response to the MPEG TS received by the additional IEEE standard 1394 interface section; and
a memory (302) for storing operation programs and data of the additional microprocessor unit.

11. The integrated terminal device as set forth in claim 10, wherein the simplified integrated device further comprises an Ethernet interface section (310) connected to the additional microprocessor unit.

12. The integrated terminal device as set forth in one of claims 5 to 11, further comprising:
a serial interface section (242) connected to the microprocessor unit, the serial interface section remotely monitoring a current state of the integrated terminal device and varying an environment of the integrated terminal device.

13. The integrated terminal device as set forth in one of claims 5 to 12, further comprising:
a display unit for displaying a current state of the integrated terminal device through the microprocessor unit.

14. The integrated terminal device as set forth in one of claims 5 to 13, further comprising:
a memory (232) for storing operation programs and data of the microprocessor unit.
